# FASCICULE DE BREVET EUROPEEN

(11) **EP 2 361 029 B1**
(45) Date de publication et mention de la délivrance du brevet: **21.08.2013**
(21) Numéro de dépôt: 09803863.1
(22) Date de dépôt: 15.12.2009
(51) Int. Cl.: A47J 31/20, A47J 31/06

(54) **THEIERE AVEC MOYEN DE RELEVAGE DE LA CAGE A INFUSION**
TEEKANNE MIT EINEM MITTEL ZUM ANHEBEN DES AUFGUSSKÖRBCHENS
TEAPOT WITH A MEANS FOR LIFTING THE INFUSION BASKET

(30) Priorité: 17.12.2008 FR 0858740
(43) Date de publication de la demande: 31.08.2011
(73) Titulaire: SEB SA, 69130 Ecully (FR)
(72) Inventeur: BOUFFAY, Alain, F-14200 Herouville Saint Clair (FR); PIRET, Philippe, F-78970 Mezières sur Seine (FR)
(74) Mandataire: Novagraaf Technologies
(86) Numéro de dépôt international: PCT/FR2009/052532
(87) Numéro de publication internationale: WO 2010/076478

(56) Documents cités:
- DE-A1- 4 433 474
- DE-C- 253 177
- US-A- 3 279 351

## Description

La présente invention concerne un appareil électroménager de préparation de boisson par infusion, tel qu'une théière.

On connaît un tel appareil du type comportant, d'une part, une bouilloire qui comprend une chambre d'infusion adaptée à contenir de l'eau, et, d'autre part, un organe d'infusion qui comprend une cage adaptée à contenir le produit à infuser, et qui est monté mobile par rapport à la bouilloire entre une position d'infusion dans laquelle la cage est disposée dans la chambre d'infusion, et une position de manipulation.

Un tel appareil est par exemple décrit dans la demande WO 2008/049163. Dans cet appareil, la bouilloire comprend, outre la chambre d'infusion, une chambre d'entraînement qui, comme la chambre d'infusion, s'étend sur toute la hauteur de la bouilloire, les deux chambres étant séparées par une simple cloison étanche. Alors que la cage est disposée dans la chambre d'infusion, la chambre d'entraînement comprend un organe d'entraînement qui s'étend sur toute la hauteur de celle-ci de façon à pouvoir entraîner la cage jusqu'au niveau de l'ouverture supérieure permettant le remplissage de la chambre d'infusion, la liaison entre la cage et l'organe d'entraînement étant réalisée magnétiquement.

L'inconvénient d'un tel appareil est notamment la complexité de sa structure (deux chambres contigües devant être absolument étanches) et la fragilité de la liaison.

La présente invention vise à réaliser un appareil de préparation de boisson par infusion ne présentant pas les inconvénients précités.

Selon l'invention et comme décrit dans la demande US3279351, l'organe d'infusion comprend un rail qui s'étend longitudinalement et qui porte la cage à une de ses extrémités, la bouilloire comportant un organe d'entraînement adapté à coopérer avec une crémaillère qui s'étend le long du rail de façon à permettre le déplacement de l'organe d'infusion de l'une à l'autre de ses positions.

Ainsi, du fait de la présence du rail, il n'est plus nécessaire d'avoir une chambre d'entraînement étanche, l'organe d'entraînement pouvant être disposé à proximité de l'ouverture supérieure de la chambre d'infusion, le rail assurant la liaison entre cet organe et la cage.

D'autres particularités et avantages de la présente invention apparaîtront dans un mode de réalisation donné à titre d'exemple non limitatif et illustré par les dessins mis en annexe dans lesquels :
La figure 1 est une vue en perspective d'un appareil conforme au présent mode de réalisation de l'invention, l'organe d'infusion étant en position d'infusion,
La figure 2 est une vue similaire à la figure 1, l'organe d'infusion étant en position de manipulation,
La figure 3 est une vue partielle de l'appareil des figures 1 et 2, sans l'organe d'infusion, illustrant l'organe d'entraînement,
La figure 4 est une vue de dessus de l'organe d'entraînement de la figure 3,
La figure 5 est une vue en perspective de l'organe d'infusion, et
La figure 6 est une vue partielle illustrant la coopération entre l'organe d'entraînement et la crémaillère.

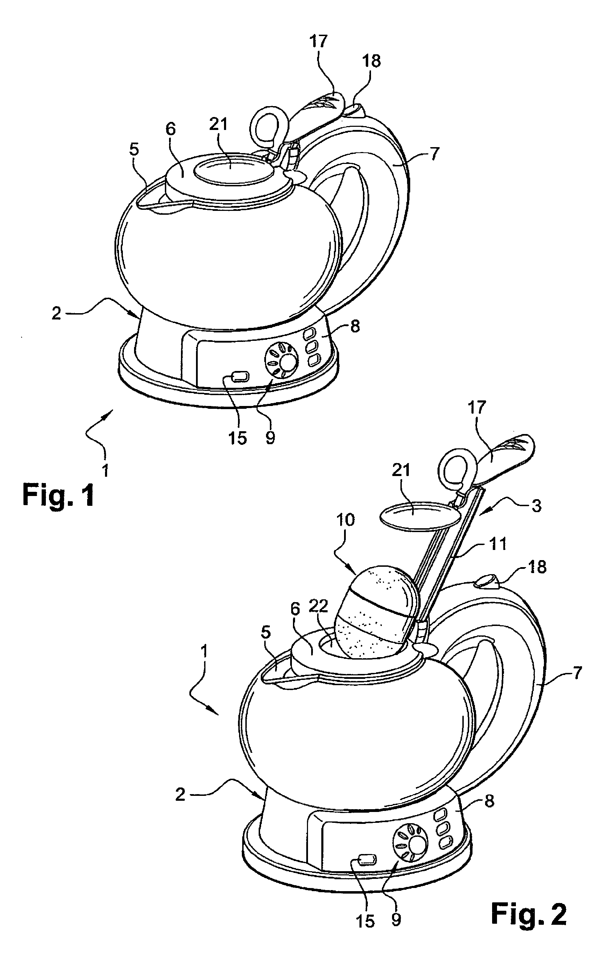

Un appareil 1 adapté à la préparation des boissons par infusion, tel qu'une théière 1, comporte une bouilloire 2 qui forme le corps de l'appareil 1 et sert de récipient pour l'eau et de lieu de l'infusion, et un organe d'infusion 3 qui renferme le produit à infuser et qui est mobile par rapport à la bouilloire 2 entre une position d'infusion (cf. figure 1) et une position de manipulation (cf. figure 2). De plus, dans le présent mode de réalisation, l'organe d'infusion 3 est séparable de la bouilloire 2 quand il est en position de manipulation.

La bouilloire 2 comprend une chambre d'infusion qui est adaptée à contenir de l'eau et qui est accessible de l'extérieur, d'une part, par une ouverture supérieure 4 par laquelle l'eau est introduite dans la chambre, et, d'autre part, par un bec verseur 5. La bouilloire 2 comprend également un couvercle 6 mobile entre une position ouverte dans laquelle il dégage l'ouverture 4 et une position fermée dans laquelle il est adapté à la recouvrir. En l'occurrence, le bec verseur 5 est en prolongement de l'ouverture 4 et n'est pas recouvert par le couvercle 6 quand il est en position fermée. Classiquement, la bouilloire 2 comprend une anse 7 permettant sa manipulation, située à l'opposé du bec verseur 5. Elle comprend également des moyens de chauffe adaptés à chauffer l'eau contenue dans la chambre d'infusion (dans le présent exemple, les moyens de chauffe comprennent une plaque faisant office de paroi de fond de la chambre d'infusion et une résistance électrique de chauffe supportée par cette plaque - par la face inférieure de celle-ci), et différents éléments permettant l'alimentation électrique et le contrôle des moyens de chauffe. Ces éléments ainsi que la résistance électrique sont disposés dans un socle 8 situé sous la chambre d'infusion, des boutons de commande manuelle 9 permettant à un utilisateur de les commander.

L'organe d'infusion 3 comprend une cage 10 qui est adaptée à contenir le produit à infuser en évitant sa dispersion dans la chambre d'infusion, et un rail 11 qui s'étend longitudinalement et qui porte la cage 10 à une de ses deux extrémités longitudinales. Quand l'organe d'infusion 3 est dans sa position d'infusion, la cage 10 est disposée dans la chambre d'infusion (et plonge dans l'eau), et quand il est en position de manipulation, la cage 10 est située au niveau de l'ouverture 4 (ici, quasiment intégralement au-dessus de cette ouverture 4). De façon classique, la cage 10 comprend un capot mobile qui permet d'avoir accès à l'intérieur de la cage 10 et d'y déposer et d'en extraire le produit à infuser.

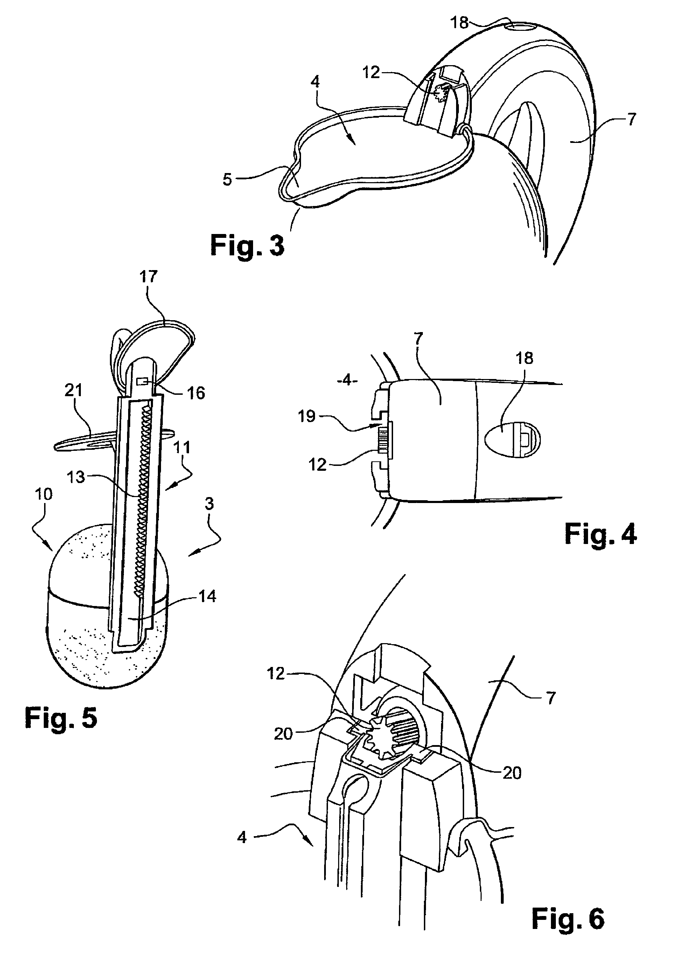

Comme illustré à la figure 3, la bouilloire 2 comporte un organe d'entraînement 12 (ici, un pignon denté 12) adapté à coopérer avec une crémaillère 13 qui s'étend le long du rail 11 de façon à permettre le déplacement de l'organe d'infusion 3 de l'une à l'autre de ses positions. Dans le présent mode de réalisation, la crémaillère 13 est disposée dans une cavité 14 longitudinale qui est réalisée sur la quasi totalité du rail 11 et qui reçoit l'organe d'entraînement 12, comme illustré à la figure 6. Par ailleurs, l'organe d'entraînement 12 est disposé de façon adjacente à l'ouverture supérieure 4 (ici, l'organe d'entraînement 12 est disposé au sommet de l'anse 7). Dans le présent exemple, la bouilloire 2 comprend un moteur qui est adapté à entraîner l'organe d'entraînement 12 (ici, le moteur est disposé dans l'anse 7) et qui peut être commandé par un bouton de commande manuel 15 (situé à côté des boutons 9 commandant et régulant les moyens de chauffe).

Par ailleurs, l'appareil 1 comprend un système de détection de fin de course de l'organe d'infusion 3. En l'occurrence, la bouilloire comprend un capteur à effet Hall qui détecte la présence d'un aimant 16 porté par l'organe d'infusion 3 et détermine la position d'infusion de ce dernier. Quant à la position de manipulation, elle est déterminée indirectement à partir de la position d'infusion, compte tenu de la longueur de la crémaillère (présence d'un compte-tour, d'une minuterie ou de tout autre dispositif à proximité de l'organe d'entraînement 12).

En outre, l'organe d'infusion 3 comporte un organe de préhension 17 qui est accessible de l'extérieur de la bouilloire 2 quand l'organe d'infusion 3 est dans sa position d'infusion. En l'occurrence, l'organe de préhension 17 est porté par le rail 11, à son extrémité longitudinale opposée à celle où se trouve la cage 10.

Selon l'invention et afin de pouvoir débloquer l'organe d'infusion 3 si cela s'avérerait nécessaire, l'organe d'entraînement 12 est mobile entre une position d'entraînement dans laquelle il est adapté à coopérer avec la crémaillère 13, et une position de libération dans laquelle il est sans contact avec cette dernière. Ainsi, en position de libération, l'utilisateur peut déplacer librement l'organe d'infusion 3. Ici, l'organe d'entraînement 12 est mobile en translation selon son axe de rotation. Par ailleurs, la bouilloire 2 comprend un bouton de commande manuel 18 qui permet d'entraîner l'organe d'entraînement 12 de l'une à l'autre de ses positions. Ici, ce bouton de commande manuel 18 est disposé sur l'anse 7 et est relié mécaniquement à l'organe d'entraînement 12.

Dans le présent exemple, la bouilloire 2 comprend des moyens de guidage 19 qui sont adaptés à coopérer avec des moyens complémentaires de guidage 20 portés par l'organe d'infusion 3 de façon à limiter le mouvement de ce dernier à son mouvement de translation. Les moyens de guidage 19, dans le présent exemple, sont formés par une glissière 19 (dans laquelle est disposé l'organe d'entraînement 12), les moyens complémentaires de guidage 20 étant formés par deux épaulements 20 qui s'étendent de chaque côté du rail, le long de celui-ci (et entre lesquels est réalisée la cavité 14). Ici, de façon à permettre la stabilisation de l'organe d'infusion 3 en position de manipulation (position dans laquelle il est séparable de la bouilloire 2 du fait du franchissement de la dernière dent de la crémaillère 13), les moyens complémentaires de guidage 20 s'étendent, en direction de la cage, au-delà de la crémaillère 13 (cf. figure 5).

De plus, l'organe d'infusion 3 comporte un capot 21 qui est disposé au-dessus de la cage 10, qui est porté par le rail 11, et qui est adapté, quand l'organe d'infusion 3 est dans sa position d'infusion, à fermer l'orifice 22 par lequel la cage 4 pénètre dans la chambre d'infusion. Dans le présent exemple, l'orifice de passage 22 est réalisé dans le couvercle 6 de la bouilloire 2.

En utilisation, après avoir introduit de l'eau dans la chambre d'infusion de la bouilloire 2 par son ouverture supérieure 4 et le produit à infuser dans la cage 10, le couvercle 6 est mis en position fermée et l'organe d'infusion 3 est mis en position de manipulation (l'extrémité inférieure du rail 11 au niveau de laquelle est fixée la cage 10 est insérée dans la glissière 19, la dent la plus basse de la crémaillère 13 venant en butée contre l'organe d'entraînement 12 et les épaulements 20 empêchant le pivotement de l'organe d'infusion 3).

Après mise en marche des moyens de chauffe, l'organe d'entraînement 12 entraîne l'organe d'infusion 3 dans sa position d'infusion (ce déplacement peut être automatique - un capteur de température détectant une température de consigne, éventuellement réglable, commandant la mise en route du moteur - ou non).

Une fois l'infusion terminée, l'organe d'entraînement 12 entraîne l'organe d'infusion 3 dans sa position de manipulation (ce déplacement peut également être automatique - commandé par une minuterie, éventuellement réglable - ou non) à partir de laquelle il peut être séparé de la bouilloire 2

A tout moment, il est possible de déplacer manuellement l'organe d'infusion 3 en agissant sur le bouton 18 permettant le désengagement de l'organe d'entraînement 12 de la crémaillère 13.

La présente invention n'est pas limitée par le présent mode de réalisation.

Ainsi, l'organe d'entraînement pourrait ne pas être motorisé mais mû par une molette actionnable manuellement. De même, même motorisé, l'appareil pourrait ne pas être automatique, le déclenchement du déplacement de l'organe dans l'un ou l'autre sens de déplacement étant alors initialisé par un bouton de commande manuel.

## Revendications

1. Appareil (1) à préparer des boissons par infusion, comportant, d'une part, une bouilloire (2) qui comprend une chambre d'infusion adaptée à contenir de l'eau, et, d'autre part, un organe d'infusion (3) qui comprend une cage (10) adaptée à contenir le produit à infuser et qui est monté mobile par rapport à la bouilloire (2) entre une position d'infusion dans laquelle la cage (10) est disposée dans la chambre d'infusion, et une position de manipulation, l'organe d'infusion (3) comprenant un rail (11) qui s'étend longitudinalement et qui porte la cage (10) à une de ses extrémités, la bouilloire (2) comportant un organe d'entraînement (12) adapté à coopérer avec une crémaillère (13) qui s'étend le long du rail (11) de façon à permettre le déplacement de l'organe d'infusion (3) de l'une à l'autre de ses positions, **caractérisé en ce que** l'organe d'entraînement (12) est mobile entre une position d'entraînement dans laquelle il est adapté à coopérer avec la crémaillère (13), et une position de libération dans laquelle il est sans contact avec ladite crémaillère de façon à permettre un déplacement manuel de l'organe d'infusion (3).

2. Appareil (1) à préparer des boissons selon la revendication 1, **caractérisé en ce que** l'organe d'entraînement (12) est un pignon denté (12).

3. Appareil (1) à préparer des boissons selon la revendication 2 dépendante de la revendication 2, **caractérisé en ce que** le pignon denté (12) est mobile en translation selon son axe de rotation.

4. Appareil (1) à préparer des boissons selon l'une des revendications 1 à 3, **caractérisé en ce que** la bouilloire (2) comprend un moteur adapté à entraîner l'organe d'entraînement (12).

5. Appareil (1) à préparer des boissons selon l'une des revendications 1 à 4, **caractérisé en ce qu'**il comprend des moyens de détection de fin de course de l'organe d'infusion (3).

6. Appareil (1) à préparer des boissons selon l'une des revendications 1 à 5, **caractérisé en ce que**, en position de manipulation, l'organe d'infusion (3) est séparable de la bouilloire (2).

7. Appareil (1) à préparer des boissons selon l'une des revendications 1 à 6, **caractérisé en ce que** l'organe d'entraînement (12) est disposé au niveau d'une ouverture (4) permettant l'introduction de l'eau dans la chambre d'infusion.

8. Appareil (1) à préparer des boissons selon l'une des revendications 1 à 7, **caractérisé en ce que** l'organe d'infusion (3) comporte un capot (21) adapté à fermer la chambre d'infusion quand l'organe d'infusion (3) est dans sa position d'infusion.

9. Appareil (1) à préparer des boissons selon l'une des revendications 1 à 8, **caractérisé en ce que** l'organe d'infusion (3) comporte un organe de préhension (17) accessible de l'extérieur de la bouilloire (2) quand l'organe d'infusion (3) est dans sa position d'infusion.

10. Appareil (1) à préparer des boissons selon l'une des revendications 1 à 9, **caractérisé en ce que** la bouilloire (2) comprend des moyens de guidage (19) adaptés à coopérer avec des moyens complémentaires de guidage (20) portés par l'organe d'infusion (3) de façon à limiter le mouvement de ce dernier à une translation.

11. Appareil (1) à préparer des boissons selon la revendication 10, **caractérisé en ce que** les moyens de guidage (19) sont formés par une glissière (19) et les moyens complémentaires de guidage (20) par deux épaulements (20) s'étendant de chaque côté du rail (11), le long de celui-ci.

12. Appareil à préparer des boissons selon la revendication 11, **caractérisé en ce que** le rail (11) comprend une cavité (14) longitudinale dans laquelle est réalisée la crémaillère (13), et recevant l'organe d'entraînement (12) qui est disposé dans la glissière (19).

13. Appareil (1) à préparer des boissons selon l'une des revendications 10 à 12, **caractérisé en ce que**, en direction de la cage (10), les moyens complémentaires de guidage (20) s'étendent au-delà de la crémaillère (13) de façon à permettre la stabilisation de l'organe d'infusion (3) en position de manipulation.

## Patentansprüche

1. Gerät (1) zur Getränkezubereitung durch Aufguss, das einerseits einen Kessel (2) mit einer Aufgusskammer, die Wasser enthalten kann, und andererseits ein Aufgusselement (3) aufweist, das einen Behälter (10) umfasst, der geeignet ist, um das aufzugießende Produkt zu enthalten, und der bezüglich des Kessels (2) zwischen einer Aufgussstellung, in der der Behälter (10) in der Aufgusskammer angeordnet ist, und einer Handhabungsstellung beweglich montiert ist, wobei das Aufgusselement (3) eine Schiene (11) enthält, die sich in Längsrichtung erstreckt und den Behälter (10) an einem ihrer Enden trägt, wobei der Kessel (2) ein Antriebselement (12) aufweist, das mit einer Zahnstange (13) zusammenwirken kann, die sich so entlang der Schiene (11) erstreckt, dass sie die Verschiebung des Aufgusselements (3) von der einen in die andere seiner Stellungen erlaubt, **dadurch gekennzeichnet, dass** das Antriebselement (12) zwischen einer Antriebsstellung, in der es geeignet ist, um mit der Zahnstange (13) zusammenzuwirken, und einer Freigabestellung beweglich ist, in der es ohne Kontakt mit der Zahnstange ist, um eine manuelle Verschiebung des Aufgusselements (3) zu ermöglichen.

2. Gerät (1) zur Getränkezubereitung nach Anspruch 1, **dadurch gekennzeichnet, dass** das Antriebselement (12) ein Zahntrieb (12) ist.

3. Gerät (1) zur Getränkezubereitung nach Anspruch 2 abhängig von Anspruch 1, **dadurch gekennzeichnet, dass** der Zahntrieb (12) gemäß seiner Drehachse translationsbeweglich ist.

4. Gerät (1) zur Getränkezubereitung nach einem der Ansprüche 1 bis 3, **dadurch gekennzeichnet, dass** der Kessel (2) einen Motor enthält, der das Antriebselement (12) antreiben kann.

5. Gerät (1) zur Getränkezubereitung nach einem der Ansprüche 1 bis 4, **dadurch gekennzeichnet, dass** es Erfassungseinrichtungen der Endstellung des Aufgusselements (3) enthält.

6. Gerät (1) zur Getränkezubereitung nach einem der Ansprüche 1 bis 5, **dadurch gekennzeichnet, dass** das Aufgusselement (3) in der Handhabungsstellung vom Kessel (2) trennbar ist.

7. Gerät (1) zur Getränkezubereitung nach einem der Ansprüche 1 bis 6, **dadurch gekennzeichnet, dass** das Antriebselement (12) im Bereich einer Öffnung (4) angeordnet ist, die das Einfüllen von Wasser in die Aufgusskammer erlaubt.

8. Gerät (1) zur Getränkezubereitung nach einem der Ansprüche 1 bis 7, **dadurch gekennzeichnet, dass** das Aufgusselement (3) einen Deckel (21) aufweist, der geeignet ist, um die Aufgusskammer zu verschließen, wenn das Aufgusselement (3) in seiner Aufgussstellung ist.

9. Gerät (1) zur Getränkezubereitung nach einem der Ansprüche 1 bis 8, **dadurch gekennzeichnet, dass** das Aufgusselement (3) ein Greifelement (17) aufweist, das von außerhalb des Kessels (2) zugänglich ist, wenn das Aufgusselement (3) in seiner Aufgussstellung ist.

10. Gerät (1) zur Getränkezubereitung nach einem der Ansprüche 1 bis 9, **dadurch gekennzeichnet, dass** der Kessel (2) Führungseinrichtungen (19) enthält, die geeignet sind, um mit komplementären Führungseinrichtungen (20) zusammenzuwirken, die vom Aufgusselement (3) getragen werden, um die Bewegung dieses letzteren auf eine Translationsbewegung zu begrenzen.

11. Gerät (1) zur Getränkezubereitung nach Anspruch 10, **dadurch gekennzeichnet, dass** die Führungseinrichtungen (19) von einer Gleitführung (19) und die komplementären Führungseinrichtungen (20) von zwei Schultern (20) gebildet werden, die sich auf jeder Seite der Schiene (11) entlang von dieser erstrecken.

12. Gerät zur Getränkezubereitung nach Anspruch 11, **dadurch gekennzeichnet, dass** die Schiene (11) einen Längshohlraum (14) enthält, in dem die Zahnstange (13) ausgebildet ist und der das Antriebselement (12) aufnimmt, das in der Gleitführung (19) angeordnet ist.

13. Gerät (1) zur Getränkezubereitung nach einem der Ansprüche 10 bis 12, **dadurch gekennzeichnet, dass** in Richtung des Behälters (10) die komplementären Führungseinrichtungen (20) sich über die Zahnstange (13) hinaus erstrecken, um die Stabilisierung des Aufgusselements (3) in der Handhabungsstellung zu erlauben.

## Claims

1. Apparatus (1) for preparing beverages by infusion including, on the one hand, a boiler (2) including an infusion brewing chamber adapted to contain water, and, on the other hand, an infusion member (3) which includes a cage (10) adapted to contain the product to be infused and which is movably mounted relative to the boiler (2) between an infusion position in which the cage (10) is disposed in the infusion chamber and a manipulation position, the infusion member (3) including a rail (11) which extends longitudinally and which carries the cage (10) at one of its ends, the boiler (2) including a drive member (12) adapted to cooperate with a rack (13) extending along the rail (11) so as to allow movement of the infusion member (3) from one to the other of its positions, **characterized in that** the drive member (12) is movable between a drive position in which it is adapted to cooperate with the rack (13) and a release position in which it is in contact with said rack so as to allow manual displacement of the infusion member (3).

2. Apparatus (1) for preparing beverages according to claim 1, **characterized in that** the drive member (12) is a toothed pinion (12).

3. Apparatus (1) for preparing beverages according to claim 2 dependant on claim 1, **characterized in that** the toothed pinion (12) is movable in translation along its axis of rotation.

4. Apparatus (1) for preparing beverages according to any one of claims 1 to 3, **characterized in that** the boiler (2) includes a motor adapted to drive the drive member (12).

5. Apparatus (1) for preparing beverages according to any of claims 1 to 4, **characterized in that** it includes means for detecting the end of travel of the infusion member (3).

6. Apparatus (1) for preparing beverages according to any one of claims 1 to 5, **characterized in that**, in the manipulation position, the infusion member (3) is separable from the boiler (2).

7. Apparatus (1) for preparing beverages according to any one of claims 1 to 6, **characterized in that** the drive member (12) is disposed level with an opening (4) for introducing water into the brewing chamber.

8. Apparatus (1) for preparing beverages according to any one of claims 1 to 7, **characterized in that** the infusion member (3) includes a cover member (21) adapted to close the infusion chamber when the infusion member (3) is in its infusion position.

9. Apparatus (1) for preparing beverages according to any one of claims 1 to 8, **characterized in that** the infusion member (3) includes a gripping member (17) accessible from outside the boiler (2) when the infusion member (3) is in its infusion position.

10. Apparatus (1) for preparing beverages according to any one of claims 1 to 9, **characterized in that** the boiler (2) includes guide means (19) adapted to cooperate with complementary guide means (20) carried by the infusion (3) body so as to limit the movement thereof to translation.

11. Apparatus (1) for preparing beverages according to claim 10, **characterized in that** the guide means (19) are formed by a slide (19) and additional guide means (20) are formed by two shoulders (20) extending along the rail (11) on each side of the latter.

12. Apparatus for preparing beverages as claimed in claim 11, **characterized in that** the rail (11) includes a longitudinal cavity (14) in which the rack (13) is formed for receiving the drive member (12) which is arranged in the slide (19).

13. Apparatus (1) for preparing beverages according to any one of claims 10 to 12, **characterized in that** the additional guide means (20) extend in the direction of the cage (10) beyond the rack (13) so as to allow stabilization of the infusion member (3) in the manipulation position.
